# EUROPÄISCHE PATENTSCHRIFT

(11) **EP 0 774 867 B1**
(45) Veröffentlichungstag und Bekanntmachung des Hinweises auf die Patenterteilung: **19.01.2005**
(21) Anmeldenummer: 96118003.1
(22) Anmeldetag: 09.11.1996
(51) Int. Cl.: H04N 5/783

(54) **Verfahren zur Erzeugung von Bildsequenzen für einen schnellen Suchvorgang bei einem Filmabspielgerät und Vorrichtung zur Durchführung des Verfahrens**
Procedure for generating image sequences during a quick search operation in a film reproduction apparatus, and arrangement for implementing the procedure
Procédé de génération de séquences d'images pendant une opération de recherche rapide dans un dispositif de reprodcution de film, et installation d'exécution de ce procédé

(30) Priorität: 18.11.1995 DE 19543017
(43) Veröffentlichungstag der Anmeldung: 21.05.1997
(73) Patentinhaber: DEUTSCHE THOMSON-BRANDT GMBH, 78048 Villingen-Schwenningen (DE)
(72) Erfinder: Adolph, Dirk, 30952 Ronnenberg (DE); Hütter, Ingo, 29223 Celle (DE)

(56) Entgegenhaltungen:
- WO-A-95/26108
- WO-A-95/28706
- SAEIJS R W J J; ET AL: "AN EXPERIMENTAL DIGITAL CONSUMER RECORDER FOR MPEG-CODED VIDEO SIGNALS" INTERNATIONAL CONFERENCE ON CONSUMER ELECTRONICS - DIGEST OF TECHNICAL PAPERS, 7. - 9. Juni 1995, Seiten 232-233, XP000547800 Rosemont

## Beschreibung

Die Erfindung betrifft ein Verfahren zur Erzeugung von Bildsequenzen für einen schnellen Suchvorgang bei einem Filmabspielgerät. Derzeit sind sogenannte Video-on-demand-Dienste (VOD) in Entwicklung, bei denen der Benutzer eines Fernsehgerätes über einen Rückkanal mit einem Anbieter von Video-on-demand-Diensten gekoppelt ist. Darüber kann er ausgesuchte Sendungen bzw. Filme anfordern. Von Seiten des VOD-Diensteanbieters wird dann der ausgewählte Film über einen entsprechenden Datenübertragungskanal zu dem Teilnehmer übertragen.

Bei dem Benutzer dieses Service besteht häufig auch der Wunsch nach sogenannten Trickmodi. Diese Trickmodi betreffen einen schnellen Suchlauf in Vorwärtsrichtung sowie in Rückwärtsrichtung, eine Pause-Funktion sowie eine Zeitlupen-Funktion. Diese Trickmodi sind auch von herkömmlichen Videorecordern her bekannt. Die Anforderung eines Trickmodi geschieht dann z.B. über die Fernbedienung des Fernsehgerätes und wird über den Rückkanal zu dem Anbieter des VOD-Dienstes übertragen. Während die Trickmodi Pause und Zeitlupe relativ einfach zu implementieren sind, es muß hierfür das letzte decodierte Bild ständig bzw. mehrmals wiederholt übertragen werden, sind die Trickmodi schneller Vor- und Rücklauf schwieriger zu implementieren.

Aufgabe der Erfindung ist die Bereitstellung solcher Trickmode-Dienste bei VOD-Dienst-Anbietern und Filmabbspielgeräten. Diese Aufgabe wird durch Anspruch 1 gelöst. Die VOD-Dienst-Anbieter benutzen sogenannte Videoserver zur Bereitstellung der anwählbaren Programme und Filme. Ein Videoserver besteht im wesentlichen aus einer oder einer Anzahl von Festplatten, auf denen die Bilddaten abgespeichert sind. Die Bilddaten sind zu diesem Zweck beispielsweise nach dem aus dem Stand der Technik bekannten MPEG-Standard (Moving Pictures Expert Group), MPEG1 oder MPEG2 digital codiert.

Um die notwendige hohe Datenkompression zu erzielen, werden nach dem MPEG2-Standard die einzelnen Bilder einer Sequenz unterschiedlich codiert. Man unterscheidet zwischen intra-codierten Bildern (I-frames), unidirektional prädizierten Bildern (P-frames) und bidirektional prädizierten Bildern (B-frames).

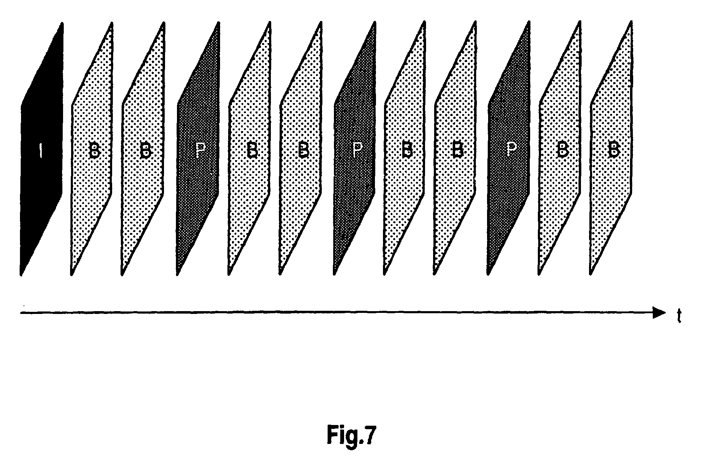

Für die intra-codierten Bilder ist jedoch ein größerer Speicherbedarf auf der Festplatte nötig als für die unidirektional bzw. bidirektional prädizierten Bilder. Die intra-codierten Bilder können unabhängig von vorhergehenden oder nachfolgenden Bildern decodiert werden, jedoch ist für die Dekodierung von unidirektional prädizierten Bildern das vorhergehende intra-codierte oder unidirektional prädizierte Bild erforderlich. Für die bidirektional prädizierten Bilder ist sowohl das vorhergehende intra-codierte oder das unidirektional prädizierte Bild als auch das nachfolgende intra-codierte oder unidirektional prädizierte Bild erforderlich. Die Abfolge, der I-,P- und B- codierten Bilder ist nach dem MPEG1 oder MPEG2-Standard weitgehend frei einstellbar. Es hat sich jedoch in der Vergangenheit gezeigt, daß ein Schema vorteilhaft ist, bei dem auf ein intra-codiertes Bild drei unidirektional-codierte Bilder folgen und zwischen jeweils zwei unidirektional-codierten Bildern bzw. einem intra-codierten Bild und einem unidirektional-codierten Bild zwei bidirektional-codierte Bilder abgespeichert werden sollten. Diese Abfolge ist in Figur 7 dargestellt. Eine solche 12 Vollbilder umfassende Sequenz wiederholt sich bei der Aufzeichnung ständig, typischerweise etwa alle 0,5 Sekunden.

Zur Realisierung eines schnellen Vorlaufs bei nach dem MPEG-Standard codierten Bildern ist eine Technik, wie sie von analogen Videorecordern bekannt ist, auf Grund der starken Datenkompression nicht mehr anwendbar. Auch eine Lösungsmöglichkeit, bei der z.B. eine Steigerung der Wiedergabegeschwindigkeit um den Faktor 12 erreicht werden würde, indem nur die intra-codierten Bilder zum Benutzer übertragen würden trifft auf Schwierigkeiten, da bei der Codierung von Videosequenzen die meisten Bits für die Codierung der intra-codierten Bilder benötigt werden. Wenn man daher nur die intra-codierten Bilder bei einem derartigen schnellen Vorlauf übertragen wollte, so ist dies auf Grund der bei diesen Bildern weit über dem Durchschnitt liegenden Bitzahl pro Bild bei den zur Verfügung stehenden Breitbandkabeln und gewünschten Kanalanzahlen nicht mehr möglich. Solch eine Lösung wird für einen digitalen Videorekorder in: "An experimental Digital Consumer Recorder for MPEG-coded Video Signales" von R.W.J:J: Saeijs, P.H.N. de With, A.M.A. Rijckaert und C. Wong in International Conference on Consumer Electronics - Digest of Technical Papers, 7. - 9. Juni 1995, Seiten 232 - 233 vorgeschlagen.

Ein anderer möglicher Weg wäre es, neben dem nach dem MPEG-Standard erzeugten Bitstrom für die reguläre Abspielgeschwindigkeit noch einen zweiten Bitstrom zu verwenden, der von einer bereits zeitlich unterabgetasteten Sequenz gewonnen wurde, und auf dem Speichermedium zusätzlich abzuspeichern. Auf diesen Bitstrom könnte dann bei dem Wunsch nach einem schnellen Vorlauf umgeschaltet werden. Dieses Verfahren hätte aber den Nachteil, daß zusätzlicher Speicherplatz für einen wahrscheinlich relativ selten verwendeten Service verbraucht werden würde. Dieser Weg ist in der WO 95/26108 beschrieben.

Das erfindungsgemäße Verfahren mit den kennzeichnenden Merkmalen des unabhängigen Anspruchs hat dem gegenüber den Vorteil, daß die erwähnten Trickmodi (schneller Vorlauf, schneller Rücklauf, Pause und Zeitlupe) mit vertretbarem Aufwand gelöst werden können. Insbesondere ist es möglich einen schnellen Vorlauf bzw. schnellen Rücklauf mit weitgehend beliebigen Geschwindigkeiten anbieten zu können. Nicht nur einzelne ausgewählte Geschwindigkeiten wie dreifach bzw. zwölffach sind realisierbar, sondern ebenfalls fünffach, neunfach, bzw. zehnfach,etc.. Weiterhin vorteilhaft ist, daß derartig realisierte Trickmodi eine sehr gute Bildqualität erzeugen.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist die Maßnahme gemäß Anspruch 4 nach der die decodierten Bilddaten einer bestimmten Anzahl von Bildern zwischengespeichert werden und rückwärts unterabgetastet werden. Dadurch wird die Trickmode-Funktion "schneller Rücklauf" ermöglicht.

Für eine Vorrichtung zur Durchführung des Verfahrens sind in den Ansprüchen 8 und 9 vorteilhafte Maßnahmen aufgeführt.

Ausführungsbeispiele der Erfindung sind in den Zeichnungen dargestellt und werden nachfolgend näher erläutert.

**Es zeigen:**
**Figur 1** ein Blockschaltbild der Gesamtanordnung zur Realisierung von VOD-Diensten inklusive der Bereitstellung von Trickmodi;
**Figur 2** ein Blockschaltbild eines Filmabspielgerätes wie z.B. eines Videodisk-Abspielgerätes;
**Figur 3** eine schematische Darstellung zur Erläuterung des erfindungsgemäßen Verfahrens bei dem ein schneller Vorlauf mit zweifach erhöhter Abspielgeschwindigkeit dargestellt ist;
**Figur 4** eine schematische Darstellung zur Erläuterung des erfindungsgemäßen Verfahrens bei dem ein schneller Vorlauf mit vierfach erhöhter Abspielgeschwindigkeit dargestellt ist;
**Figur 5** eine schematische Darstellung zur Erläuterung des erfindungsgemäßen Verfahrens, bei dem ein schneller Vorlauf mit zwölffach erhöhter Abspielgeschwindigkeit dargestellt ist;
**Figur 6** ein Blockschaltbild eines zweiten Ausführungsbeispiels eines Filmabspielgerätes und
**Figur 7** eine schematische Darstellung einer bereits aus dem Stand der Technik bekannten Abfolge von verschieden codierten Bildern.

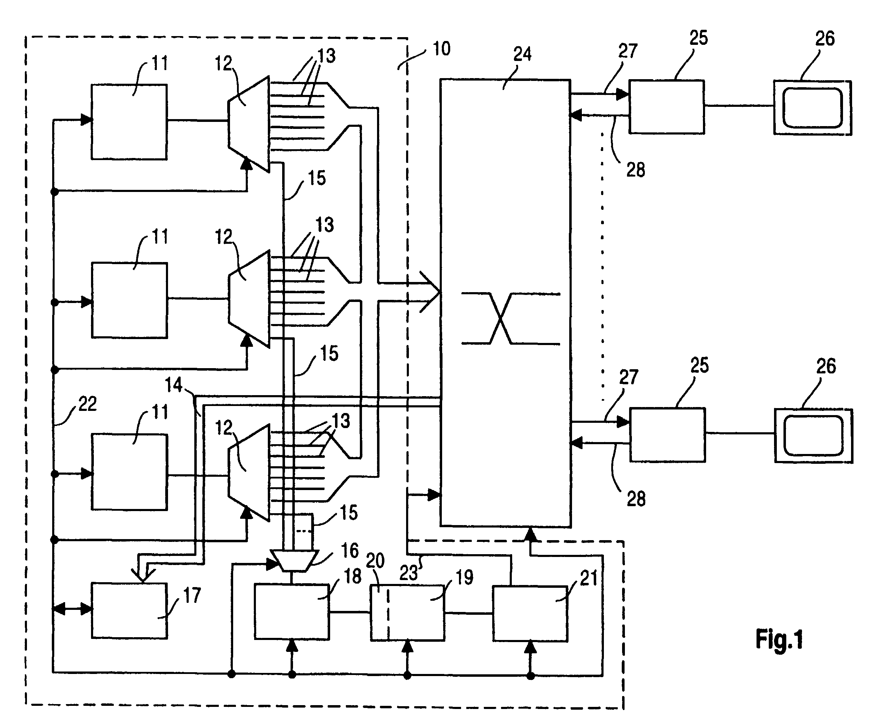

In der Figur 1 bezeichnet die Bezugszahl 10 sämtliche Komponenten, die bei dem VOD-Dienst-Anbieter zur Realisierung des erfindungsgemäßen Verfahrens erforderlich sind. Diese Komponenten werden nachfolgend noch genauer erläutert. Mit der Bezugszahl 26 sind Fernsehgeräte bezeichnet. Diese werden von unterschiedlichen Nutzern benutzt. Mit der Bezugszahl 25 sind Dekodiereinheiten bezeichnet, die auch unter dem geläufigeren Namen "Set-Top-Box" bekannt sind. Mit der Bezugszahl 27 sind Datenkanäle bezeichnet, die die Videodaten von dem VOD-Dienst-Anbieter zu dem jeweiligen Benutzer transportieren. Mit der Bezugszahl 28 sind ebenfalls Datenkanäle bezeichnet. Diese Datenkanäle transportieren in umgekehrter Richtung Daten von dem jeweiligen Benutzer zu dem VOD-Dienst-Anbieter. Nachfolgend werden die Datenkanäle 27 als Hinkanal bezeichnet und die Datenkanäle 28 als Rückkanal. Mit der Bezugszahl 24 ist ein Koppelfeld bezeichnet. Dieses Koppelfeld 24 vermittelt zwischen den eingangsseitig anstehenden einzelnen Datenkanälen 13 und den ausgangsseitig angeschlossenen Datenkanälen 27. Das Koppelfeld 24 entspricht daher z.B. einer Vermittlungsstelle, wie sie aus dem Stand der Technik hinlänglich bekannt ist. Als Beispiel wird ein ISDN-Vermittlungssystem genannt.

Mit der Bezugszahl 11 sind Festplatten mit sehr großer Kapazität bezeichnet. Auf diesen Festplatten sind die einzelnen angebotenen Fernsehprogramme bzw. Videofilme abgespeichert. Dabei sind auf einer einzelnen Festplatte mehrere Filme bzw. Programme abgespeichert. Im dargestelleten Ausführungsbeispiel sind auf jeder Festplatte sieben unterschiedliche Programme bzw. Videofilme abgespeichert. Die Datentransferrate der einzelnen Festplatten ist sehr hoch, so daß die Festplatten 11 nach einem Zeitmultiplexverfahren die Daten der angebotenen Filme bzw. Programme einem Demultiplexer 12 bereitstellen können. Die Demultiplexer 12 sind so ausgelegt, daß sie jeweils zum richtigen Zeitpunkt die an ihrem Eingang anstehenden Daten dem richtigen Datenkanal 13 zuordnen. Natürlich können damit auch an mehrere Datenkanäle 13 dieselben Daten angelegt werden. Die einzelnen Datenkanäle 13 sind in Figur 1 zusammengefaßt dargestellt und enden in einem parallelen Bus. Dies dient jedoch nur der Vereinfachung der Darstellung. Die einzelnen Datenkanäle 13 sind nach wie vor seperat vorhanden und gehen auch seperat zu dem Koppelfeld 24.

Von dem Koppelfeld 24 ist ein paralleler oder serieller Bus 14 zu einer Steuereinheit 17 geführt. Der parallele Bus 14 besteht aus den einzelnen Rückkanälen 28. In der Steuereinheit 17 laufen also die Dienstanforderungen der Benutzer ein. Ausgehend von den eingegangenen Anforderungen steuert die Steuereinheit 17 das Koppelfeld 24 über einen seriellen Bus 22. Es teilt dem Koppelfeld 24 insbesondere mit, welcher Datenkanal 27 mit welchem Datenkanal 13 zu verbinden ist.

Zur Realisierung von Trickmodi ist an jedem Demultiplexer 12 eine besondere Datenleitung 15 angeschaltet. Diese Datenleitungen 15 führen auf einen Multiplexer 16. Der Ausgang des Multiplexers 16 steht mit einem Decoder 18 in Verbindung. Sofern die Daten auf den Festplatten 11 nach dem MPEG-Standard abgelegt sind, handelt es sich bei dem Decoder 18 ebenfalls um einen MPEG Decoder. Dieser Decoder weist jedoch die Besonderheit auf, daß er, gesteuert über den seriellen Bus 22, mit einer höheren Geschwindigkeit arbeitet, als die Decodiereinheit 25, im regulären Abspielmodus. Hierauf wird im folgenden jedoch noch genauer eingegangen werden. Mit der Bezugszahl 19 ist eine Unterabtasteinheit bezeichnet. Diese enthält einen Zwischenspeicher 20. Auch die Unterabtasteinheit 19 wird über den seriellen Bus 22 von der Steuereinheit 17 gesteuert. Die Unterabtasteinheit 19 steht ihrerseits mit einer Encodiereinrichtung 21 in Verbindung. Auch die Encodiereinheit 21 arbeitet nach dem MPEG1 oder 2-Standard. Sie arbeitet jedoch mit der gleichen Arbeitsgeschwindigkeit, wie auch die Decodereinrichtungen 25 im normalen Abspielmodus. Die so codierten Daten werden über einen weiteren Datenkanal 23 dem Koppelfeld 24 zugeführt.

Über den seriellen oder parallen Bus 22 werden weiterhin die Festplatten 11 sowie die Demultiplexer-Einrichtungen 12 als auch die Multiplexer-Einrichtung 16 gesteuert.

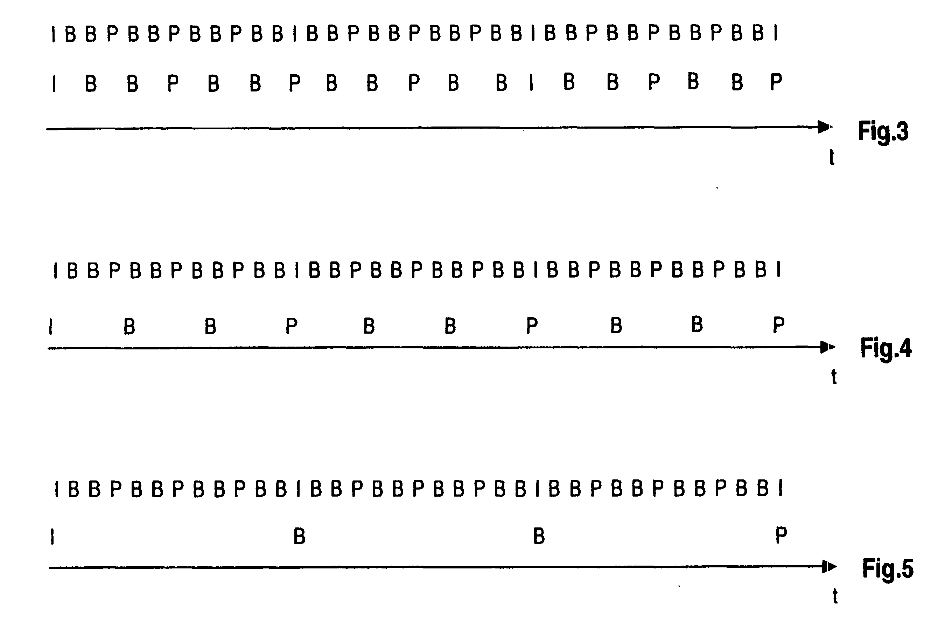

Nachfolgend wird die Funktionsweise der Anordnung gemäß Figur 1 in Zusammenhang mit Figur 3 erläutert. In Figur 3 ist der Fall dargestellt, daß einer der Benutzer des VOD-Dienstes die Anforderung des schnellen Suchlaufs (Vorlaufs) über den ihm zugeordneten Rückkanal 28 zu der Steuereinheit 17 übertragen hat. Die Anforderung betrifft konkret den Fall, daß der zu ihm übertragene Film mit zweifacher Geschwindigkeit gegenüber dem regulären Abspielvorgang vorgespult werden soll. Nach dem diese Anforderung in der Steuereinheit 17 empfangen wurde, gibt die Steuereinheit 17 an diejenige Festplatte 11, auf der das gewünschte Programm abgespeichert ist, den Befehl, dieses Programm mit zweifacher Geschwindigkeit von der Festplatte 11 zu lesen.

Ebenfalls gibt sie einen Befehl an die der Festplatte zugeordnete Demultiplexer-Einrichtung 12 die Daten des entsprechenden Programms bzw. Films an die Datenleitung 15 statt der vorher zugeordneten Datenleitung 13 zu übergeben. Die Steuereinheit 17 übermittelt weiterhin einen Befehl an die Multiplexereinheit 16, den entsprechneden Datenkanal 15, an dem die mit hoher Geschwindigkeit ausgelesenen Daten anstehen, der Decodiereinrichtung 18 zuzuführen. Weiterhin übermittelt die Steuereinheit 17 der Decodiereinrichtung 18 den Befehl, daß sie die anstehenden Daten mit zweifacher Geschwindigkeit gegenüber regulärem Abspielbetrieb verarbeiten soll. Die zweifache Erhöhung der Arbeitsgeschwindigkeit der Decodiereinrichtung 18 kann beispielsweise dadurch erreicht werden, das die Taktfrequenz dieser Decodiereinrichtung entsprechend um den Faktor 2 erhöht wird. Die Steuereinheit 17 übermittelt außerdem noch einen Befehl an die Unterabtasteinheit 19. Dieser Befehl teilt der Unterabtasteinheit 19 mit, daß sie von den an ihrem Eingang anstehenden decodierten Bilddaten jeweils nur jedes 2. Bild an die Encodiereinrichtung 21 weitergeben soll. Alle anderen anfallenden Bilddaten werden unterdrückt. Mit einem weiteren Befehl teilt die Steuereinheit 17 der Encodiereinrichtung 21 mit, daß sie nachfolgend Bilddaten codieren muß.

Ein weiterer Befehl der Steuereinheit 17 wird dem Koppelfeld zugeführt. Mit diesem Befehl wird dem Koppelfeld 24 mitgeteilt, daß es nunmehr die Daten für den Benutzer, der den Trickmode (schneller Vorlauf mit zweifacher Geschwindigkeit) angefordert hat, von dem Datenkanal 23 abnehmen soll.

Das zweifach schnellere Auslesen der Bilddaten von der ausgewählten Festplatte 11 erfordert, daß die Festplatte und die entsprechende Datenübertragungsleitung zum Demultiplexer noch freie Datenübertragungskapazität aufweist.

Die Abfolge der von der entsprechenden Festplatte 11 mit zweifacher Geschwindigkeit ausgelesenen Bilddaten ist im oberen Teil der Figur 3 dargestellt. Diese Bilddaten werden in der Decodiereinrichtung 18 alle decodiert. Als Ergebnis stehen am Ausgang der Decodiereinrichtung 18 decodierte Bilddaten an. Pro Bild fallen hier jeweils gleich große Datenmengen an. Von der Unterabtasteinheit wird jeweils nur jedes zweite Bild zur Encodiereinrichtung 21 weitergeleitet. Die Encodiereinrichtung 21 codiert nur die weitergeleiteten Bilddaten. Dies geschieht nach dem MPEG-Standard. Als Abfolge erscheint am Ausgang der Encodiereinrichtung 21 die gleiche Sequenz, von codierten Bildern, wie in Figur 7 dargestellt. Die Abfolge ist im unteren Teil der Figur 3 dargestellt.

Figur 4 betrifft den Fall bei dem von einem Benutzer des VOD-Dienstes ein schneller Vorspulvorgang mit vierfacher Geschwindigkeit gegenüber dem regulären Abspielbetrieb gewünscht wird. Die Bilddaten des entsprechend angewählten Programms werden mit vierfacher Geschwindigkeit von der Festplatte gelesen. Sie werden ebenfalls in der Decodiereinrichtung 18 mit vierfacher Geschwindigkeit decodiert. In der Unterabtasteinheit 21 wird nur jedes 4. decodierte Bild an die Encodiereinheit 21 weitergeleitet. Die Encodiereinheit 21 codiert die anstehenden Bilder erneut mit regulärer Abspielgeschwindigkeit. Die enstehende Abfolge von Bildsequenzen ist im unteren Teil der Figur 4 dargestellt.

Figur 5 betrifft den Fall das von dem Benutzer eines VOD-Dienstes ein Vorspulvorgang mit zwölffacher Abspielgeschwindigkeit angefordert wird. Hier werden die entsprechenden Bilddaten mit zwölffacher Geschwindigkeit von der Festplatte gelesen und mit zwölffacher Geschwindigkeit von der Decodiereinheit 18 decodiert. In der Unterabtasteinheit 19 wird nur jedes zwölfte Bild ausgewählt und an die Encodiereinrichtung 21 weitergeleitet. Die entstehende Abfolge von Bildern ist ebenfalls im unteren Teil der Figur 5 dargestellt. Natürlich ist das beschriebene Verfahren auch bei einer anderen Bildabfolge als der in Figur 7 dargestellten anwendbar.

Für die Realisierung des Trickmodi schneller Rücklauf ist in der Unterabtasteinheit 19 ein Zwischenspeicher 20 vorgesehen. Der schnelle Rücklauf mit dreifacher Abspielgeschwindigkeit gegenüber regulären Abspielbetrieb funktioniert dann wie folgt: Vorausgesetzt ist, daß die Bilddaten mit der in Figur 7 dargestellten Bildabfolge auf der Festplatte abgelegt sind. Beim Rücklaufbetrieb werden dann immer die Bilddaten von 12 aufeinanderfolgenden Bildern mit dreifacher Geschwindigkeit von der Festplatte ausgelesen und von der Decodiereinrichtung 18 mit dreifacher Geschwindigkeit decodiert. Die decodierten Bilddaten aller zwölf aufeinanderfolgenden Bilder werden dann in dem Zwischenspeicher 20 gesammelt. Anschließend werden dann die Bilddaten jedes dritten Bildes ausgehend von der Seite der zuletzt decodierten Bilddaten zu der Encodiereinrichtung 21 weitergeleitet. Es findet also eine Unterabtastung in umgekehrter zeitlicher Reihenfolge statt. Der Encoder 21 arbeitet ganz normal, wie in den zuvor beschriebenen Fällen erläutert.

Nachdem die ersten 12 Bilder verarbeitet wurden, werden die zeitlich davor liegenden zwölf Bilder von der Festplatte ausgelesen, decodiert und in den Zwischenspeicher eingeschrieben. Um hier einen Suchvorgang zu vermeiden, sollten auf der Festplatte jeweils für eine Vollbildsequenz Zeiger auf den Anfang der vorherliegenden Vollbildsequenz abgespeichert sein.

Auch diese Vollbildsequenz wird dann wieder unterabgetastet und in ihrer Reihenfolge vertauscht. Auf diese Art und Weise entsteht dann ein schneller Rücklauf mit dreifacher Abspielgeschwindigkeit. Natürlich ist auf die gleiche Art und Weise auch ein schneller Rücklauf mit anderen Abspielgeschwindigkeiten möglich. Auch hier gilt, daß das Verfahren auch bei anderen Bildabfolgen als der in Figur 7 dargestellten entsprechend anwendbar ist.

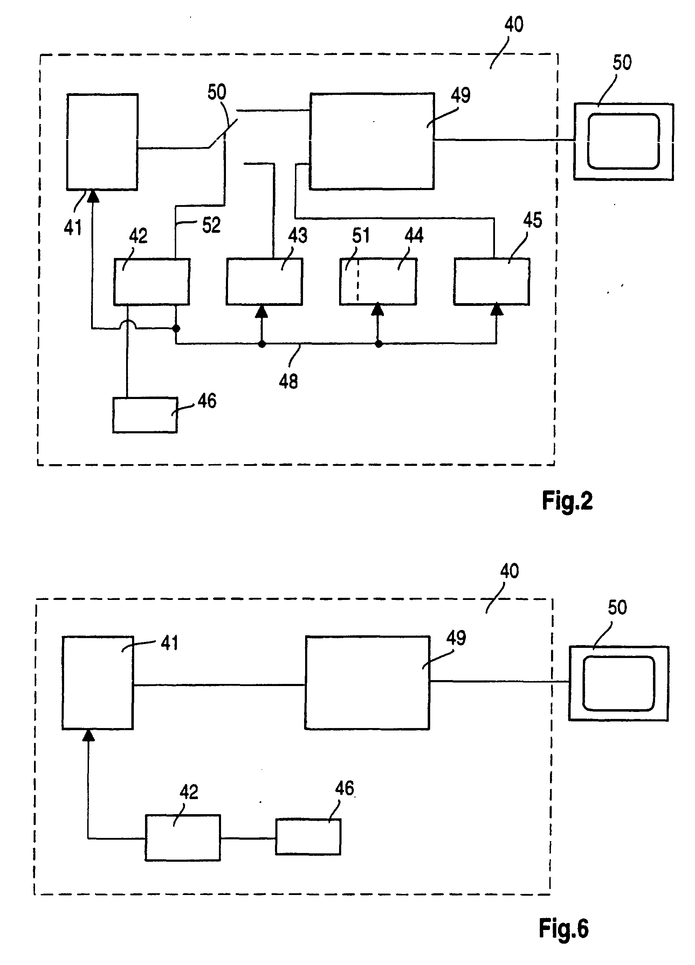

In Figur 2 ist ein zweites Ausführungsbeispiel der Erfindung dargestellt. In Figur 2 bezeichnet die Bezugszahl 40 ein Filmabspielgerät. Beispielsweise handelt es sich hier um ein Abspielgerät für digitale Bildplatten. Es kann sich aber auch um einen digitalen Videorecorder handeln oder um ein anders geartetes Abspielgerät zur Darstellung von bewegten Bildern, bei dem die Bilddaten z.B. nach dem MPEG-Standard codiert abgespeichert sind. Mit der Bezugszahl 41 ist eine Speichereinheit bezeichnet. Es kann sich um eine Bildplatte, ein Magnetband, einen holographischen Speicher, etc. handeln. Mit der Bezugszahl 47 ist eine Schalteinheit bezeichnet. Mit der Bezugszahl 42 ist eine Steuereinheit bezeichnet. Mit der Bezugszahl 43 ist eine Decodiereinrichtung bezeichnet. Mit der Bezugszahl 44 ist wiederum eine Unterabtasteinheit bezeichnet. In der Unterabtasteinheit 44 ist ein Zwischenspeicher 51 vorgesehen. Mit der Bezugszahl 45 ist erneut eine Encodiereinrichtung bezeichnet. Die Bezugszahl 49 bezeichnet einen Bildsignalerzeuger. Mit der Bezugszahl 48 ist ein Steuerbus bezeichnet. Mit der Bezugszahl 50 ist ein herkömmliches Fernsehgerät bezeichnet. Die Bezugszahl 46 bezeichnet eine Eingabeeinheit.

Die Funktionsweise des Abspielgerätes wird nachfolgend kurz erläutert. Der Bediener des Abspielgerätes kann über die Eingabeeinheit 46 spezielle Trickmodi abrufen. Es wird der Fall betrachtet, daß er einen schnellen Vorlauf mit sechsfacher Abspielgeschwindigkeit anfordert. Der Befehl des Bedieners wird über die Verbindungsleitung von der Eingabeeinheit 46 zu der Steuereinheit 42 weitergeleitet. Die Steuereinheit 42 gibt über den Steuerbus 48 einen entsprechenden Befehl an die Speichereinheit 41 mit dem sie ihr mitteilt, daß nachfolgend die Daten mit sechsfach erhöhter Geschwindigkeit ausgelesen werden sollen.

Ebenfalls über den Steuerbus 48 teilt sie der Encodiereinrichtung 43 mit, daß nachfolgend Daten mit sechsfach erhöhter Geschwindigkeit decodiert werden sollen. Der Unterabtasteinheit 44 teilt sie den Befehl mit, daß jeweils nur die Bilddaten jedes sechsten decodierten Bildes an die Encodiereinrichtung 45 weitergeleitet werden sollen.

Der Encodiereinrichtung 45 teilt der Steuereinheit 42 lediglich einen Startbefehl mit, so daß die am Eingang anstehenden Daten zeitrichtig verarbeitet werden. Schließlich gibt sie über die separate Steuerleitung 52 einen Befehl an die Umschalteinheit 47, so daß die von der Speicheinheit 41 ausgelesenen Daten nachfolgend zur Decodiereinrichtung 43 weitergeleitet werden. Die Arbeitsweise der Komponenten 43, 44 und 45 entspricht der Arbeitsweise der zuvor erläuterten Komponenten 18, 19 und 21 des vorhergehenden Ausführungsbeispiels. Es wird deshalb nicht nochmal näher auf die Arbeitsweise dieser Komponenten eingegangen.

Die Encodiereinrichtung 45 kann auf die spezifischen Anforderungen des Trickmodes angepaßt sein. So kann Speicherplatz z.B. dadurch eingespart werden, daß keine bidirektional codierten Bilder erzeugt und im encodierten Bitstrom verwendet werden. Außerdem ist eine Vereinfachung dadurch zu erreichen, daß höhere DCT-Koeffizienten (DCT=Digital Cosinus Transformation) im Trickmode niemals übertragen werden.

Die am Ausgang der Encodiereinrichtung 45 anstehenden Daten gelangen zum Bildsignalerzeuger 49. Dieser wandelt die digitalen Daten in Videosignale um, die dann zu dem Fernsehgerät 50 weitergeleitet werden. Ein derartiger Bildsignalerzeuger ist aus dem Stand der Technik hinlänglich bekannt. Sowohl bei dem Ausführungsbeispiel gemäß Figur 1 als auch bei dem Ausführungsbeispiel gemäß Figur 2 müssen die Bilddaten mit erhöhter Geschwindigkeit von der Speichereinheit gelesen werden. Wenn es sich dabei um eine Festplatte handelt, muß deshalb schon von vornherein eine bestimmte Datenübertragungskapazität freigehalten werden, damit eine hohe Vorspul- bzw. Rückspulgeschwindigkeit erreicht werden kann. Die maximale Transferdatenrate der Festplatte darf nämlich nicht überschritten werden.

Um diesen Nachteil zu vermeiden, müssen die beschriebenen Verfahren leicht abgewandelt werden. Dabei wird dann allerdings auf die Möglichkeit verzichtet, beliebige Vorspul- bzw. Rückspulgeschwindigkeiten anzubieten. Es werden dann nur bestimmte Vorspulgeschwindigkeiten nämlich z.B. die Vorspulgeschwindigkeiten 3 und 12 eingesetzt. Dadurch ergibt sich dann nämlich, daß bei der in Figur 7 dargestellten Abfolge von codierten Bildern nur noch die intra-codierten und unidirektional-codierten Bilder von der Speichereinheit gelesen werden müssen. Dadurch brauchen dann also die dazwischenliegenden bidirektional-codierten Bilder gar nicht erst übertragen werden.

Um dies zu erreichen, ist es erforderlich, daß zusammen mit einem intra- bzw. unidirektional-codierten Bild ein Zeiger abgespeichert wird, der auf das nächstfolgende unidirektional-bzw. intra-codierte Bild hinweist. Entsprechend muß für den Rücklauf mit den Geschwindigkeiten 3 und 12 jeweils ein Zeiger abgelegt werden, der auf das vorhergehende intra- bzw. unidirektional-codierte Bild hinweist. Die so ausgelesen Bilddaten können dann wie beschrieben der Decodiereinrichtung 18 zugeleitet werden. Eine Unterabtastung durch die Unterabtasteinheit 19 ist dann nicht mehr erforderlich, so daß diese dann entfallen kann. Die Decodiereinrichtung 18 kann dann mit normaler Geschwindigkeit arbeiten, wie auch bei regulärem Abspielbetrieb. Die decodierten Bilder werden direkt der Encodiereinheit 21 zugeleitet, die dann ebenfalls wie beschrieben arbeitet. Die Decodierung und nachfolgende Encodierung ist aber dann ebenfalls erforderlich, damit nicht nur intra-codierte Bilder zu dem Koppelfeld 21 übertragen werden. Es würde sich sonst aus den bereits oben erläuterten Gründen eine zu große Datenmenge ergeben, die über die vorgesehenen Kanäle 27 nicht übertragbar wäre.

Für den Fall eines Gerätes entsprechend des zweiten Ausführungsbeispiels ergeben sich dann jedoch größere Vereinfachungen. Dies wird nachfolgend an der Figur 6 erläutert. In der Figur 6 bezeichnen gleiche Bezugszahlen das Gleiche wie die entsprechenden Bezugszahlen in Figur 2. Sie werden deshalb hier nicht nochmals erläutert. Die Vereinfachung besteht darin, daß sowohl die Umschalteinheit 47, die Decodiereinrichtung 43, die Unterabtasteinheit 44 als auch die Encodiereinrichtung 45 entfallen können. Dafür muß die Übertragungsstrecke von der Speichereinheit 41 zum Bildsignalerzeuger 49 mit größerer Transportkapazität ausgelegt sein. Es muß nämlich gewährleistet sein, daß über diese Übertragungsstrecke nur noch intra-codierte Bilder übertragen werden können.

Die Steuereinheit 42 gibt nur noch einen entsprechenden Befehl an die Speichereinheit 41 ab, mit dem es die Speichereinheit 41 dazu veranlasst, nur noch intra-codierte Bilder bei einem schnellen Vor- oder Rücklauf mit dem Faktor 12 bzw.nur noch intra-codierte Bilder und unidirektional-codierte Bilder bei einem schnellen Vor- bzw. Rücklauf mit dem Faktor 3 auszugeben.

Auch eine Kombination der beiden beschriebenen Verfahren liegt im Bereich der Erfindung. So könnte bei einem Filmabspielgerät für die Realisierung niedrigerer Vorspul- bzw. Rückspulgeschwindigkeiten (z.B. 2-, 3,- und 4-fach) das zuerst erläuterte Verfahren eingesetzt werden und für höhere Vorspul- bzw. Rückspulgeschwindigkeiten das zweite beschriebene Verfahren eingesetzt werden. Dabei werden dann nur Vielfache von 3 oder 12 (z.B. 6-, 9-, 12-, 24- und 36-fach) als höhere Vorspul- bzw. Rückspulgeschwindigkeiten realisiert.

Die Übertragung der Daten zu dem Decoder 25 bzw. zu dem Fernsehgerät 50 kann über Satellit, terrestrisch oder leitungsgebunden erfolgen. Natürlich könnten die Daten statt zu einem Fernsehgerät auch zu einem Videorekorder oder dergleichen übertragen werden.

Prinzipiell kann das Verfahren auch für einen schnellen Suchlauf für Audio-Daten z.B. bei einem CD-Spieler eingesetzt werden. Dann werden die Audiodaten mit erhöhter Geschwindigkeit von dem Speichermedium gelesen, mit erhöhter Geschwindigkeit dekodiert, zeitlich unterabgetastet und einem Enkoder zugeführt.

## Patentansprüche

1. Verfahren zur Erzeugung von Bildsequenzen für einen schnellen Suchvorgang bei einem Filmabspielgerät, wobei die Bilddaten für die einzelnen Bilder des Films als Abfolge von unidirektional-codierten, bidirektionalcodierten und intra-codierten Bildern in einer Speichereinheit abgelegt sind, **dadurch gekennzeichnet, daß** die Bilddaten der Bilder mit erhöhter Geschwindigkeit gegenüber einem regulären Abspielvorgang aus der Speichereinheit (11,41) ausgelesen werden, daß die Bilddaten der Bilder in einem Decoder (18,43) mit erhöhter Geschwindigkeit decodiert werden, daß von den decodierten Bilddaten nur die Bilddaten bestimmter einzelner Bilder ausgewählt werden und einem Encoder (21,45) zugeführt werden, der mit regulärer Geschwin-digkeit arbeitet und daß die so codierten Bilddaten für die Bildsequenzen des schnellen Suchvorgangs bereit-gestellt werden.

2. Verfahren nach Anspruch 1, **wobei** die Bilddaten der Bilder mit n-fach erhöhter Geschwindigkeit gegenüber dem regulären Abspielbetrieb aus der Speichereinheit (11) ausgelesen werden, wobei n eine Zahl, insbesondere eine natürliche Zahl, größer oder gleich 2 ist, daß der Decoder ebenfalls mit n-fach erhöhter Geschwindigkeit gegenüber dem regulären Abspielbetrieb betrieben wird, und daß die mit erhöhter Geschwindigkeit decodierten Bilddaten (18, 43) durch zeitliche Unterabtastung um den Faktor n reduziert werden.

3. Verfahren nach Anspruch 2, **wobei** bei der Unterabtastung um den Faktor n nur die decodierten Bilddaten jedes n-ten Bildes an den Encoder (21, 45) weitergeleitet werden.

4. Verfahren nach einem der vorhergehenden Ansprüche, wobei die decodierten Bilddaten einer bestimmten Anzahl von Bildern für einen schnellen Rücklauf zwischengespeichert werden und rückwärts unterabgetastet werden.

5. Verfahren nach Anspruch 4, **wobei** daß die bestimmte Anzahl von Bildern eine Sequenz von 12 Vollbildern betrifft.

6. Verfahren nach Anspruch 4 oder 5, **wobei** bei der rückwärts arbeitenden Unterabtastung ausgehend von dem zuletzt decodierten Bild die Bilddaten bestimmter einzelner Bilder in zeitlich umgekehrter Reihenfolge dem Encoder (21,45) zugeführt werden.

7. Verfahren nach einem der vorgehenden Ansprüche, **wobei** die Bilddaten nach dem MPEG1- oder MPEG2-Standard codiert und decodiert werden.

8. Vorrichtung zur Durchführung eines Verfahrens nach einem der vorhergehenden Ansprüche, mit einer Speichereinheit und einem Decoder zur Decodierung von in der Speichereinheit als Abfolge von unidirektional-codierten, bidirektionalcodierten und intra-codierten Bildern abgelegten Bilddaten, **dadurch gekennzeichnet, daß** Mittel vorgesehen sind, die die Bilddaten gegenüber einem regulären Abspielmodus mit n-facher Geschwindigkeit auslesen, wobei n eine Zahl, insbesondere natürliche Zahl, größer gleich 2 ist, daß weiterhin ein Decoder (18,43) vorgesehen ist, der die ausgelesenen Bilddaten mit n-facher Geschwindigkeit decodiert, daß weiterhin eine Unterabtasteinheit (19,44) vorgesehen ist, die von den decodierten Bilddaten nur diejenigen jedes n-ten Bildes auswählt und das weiterhin ein Encoder (21,45) vorgesehen ist, der die Bilddaten der ausgewählten Bilder mit regulärer Geschwindigkeit codiert.

9. Vorrichtung nach Anspruch 8, **wobei** sie einen Zwischenspeicher (20,51) aufweist, der jeweils die decodierten Bilddaten einer bestimmten Anzahl von Bildern aufnimmt und das Mittel vorgesehen sind, die ausgehend von dem zuletzt decodierten Bild die Bilddaten jedes n-ten Bildes in zeitlich umgekehrter Reihenfolge dem Encoder (21,45) bereitstellen.

## Claims

1. Method for the production of picture sequences for a fast search operation in a film playback device, the video data for the individual pictures of the film being stored in a storage unit as a series of unidirectional-, bi-directional- and intra-coded pictures, **characterized in that** the video data of the pictures are read out from the storage unit (11, 41) at a speed which is increased compared with a regular playback operation, **in that** the video data of the pictures are decoded at an increased speed in a decoder (18, 43) **in that** only the video data of specific individual pictures are selected from the decoded video data and are fed to an encoder (21, 45) which operates at a regular speed, and **in that** the video data encoded in this way are made available for the picture sequences of the fast search operation.

2. Method according to Claim 1, wherein the video data of the pictures are read out from the storage unit (11) at a speed which has been increased n-fold compared with the regular playback mode, n being a number, in particular a natural number, greater than or equal to 2, wherein the decoder is likewise operated at a speed which has been increased n-fold compared with the regular playback mode, and wherein the video data (18, 43) which have been decoded at an increased speed are reduced by time-domain subsampling by the factor n.

3. Method according to Claim 2, wherein only the decoded video data of every nth picture are forwarded to the encoder (21, 45) in the event of subsampling by the factor n.

4. Method according to one of the preceding claims, wherein the decoded video data of a specific number of pictures are buffered for a fast reverse run and are subsampled backwards.

5. Method according to Claim 4, wherein the specific number of pictures relates to a sequence of 12 frames.

6. Method according to Claim 4 or 5, wherein, during the subsampling which operates backwards, starting from the last decoded picture, the video data of specific individual pictures are fed to the encoder (21, 45) in reverse chronological order.

7. Method according to one of the preceding claims, wherein the video data are coded and decoded in accordance with the MPEG1 or MPEG2 Standard.

8. Apparatus for carrying out a method according to one of the preceding claims, having a storage unit and a decoder for decoding video data stored in the storage unit as a series of unidirectional-, bi-directional- and intra-coded pictures, **characterized in that** means are provided which read out the video data at a speed n times that of a regular playback mode, n being a number, in particular a natural number, greater than or equal to 2, **in that** furthermore a decoder (18, 43) is provided which decodes the read-out video data at the n-fold speed, **in that** furthermore a subsampling unit (19, 44) is provided which selects from the decoded video data only those of every nth picture, and **in that** furthermore an encoder (21, 45) is provided which encodes the video data of the selected pictures at a regular speed.

9. Apparatus according to Claim 8, wherein it has a buffer (20, 51) which in each case receives the decoded video data of a specific number of pictures, and wherein means are provided which, starting from the last decoded picture, make available to the encoder (21, 45) the video data of every nth picture in reverse chronological order.

## Revendications

1. Procédé de génération de séquences d'images pour une opération de recherche rapide dans un dispositif de reproduction de film, où les données d'image de chacune des images du film sont enregistrées dans une unité de mémoire sous forme de séquence d'images unidirectionnelles codées, bidirectionnelles codées et intra-codées, **caractérisé en ce que** les données d'image des images sont lues depuis l'unité de mémoire (11, 41) à une vitesse accrue par rapport au mode de lecture régulier, **caractérisé en ce que** les données d'image des images sont décodées dans un décodeur (18, 43) à une vitesse accrue, **caractérisé en ce que** uniquement les données d'image de certaines images individuelles sont sélectionnées parmi les données d'image décodées, puis transmises à un encodeur (21, 45) fonctionnant à une vitesse régulière, et **caractérisé en ce que** les données d'image codées de la sorte sont mises à disposition pour les séquences d'image de l'opération de recherche rapide.

2. Procédé selon la revendication 1, où les données d'image des images sont lues depuis l'unité de mémoire (11) à une vitesse n fois supérieure par rapport au mode de lecture régulier, où n est un nombre, plus particulièrement un nombre naturel supérieur ou égal à 2, **caractérisé en ce que** le décodeur fonctionne également à une vitesse n fois supérieure par rapport au mode de lecture régulier et **caractérisé en ce que** les données d'image décodées (18, 43) à une vitesse accrue sont réduites du facteur n par sous-échantillonnage dans le temps.

3. Procédé selon la revendication 2, où lors du sous-échantillonnage du facteur n, uniquement les données d'image décodées d'une image sur n images sont transmises à l'encodeur (21, 45).

4. Procédé selon une des revendications précédentes, où les données d'image décodées d'un certain nombre d'images sont mises en mémoire tampon et sous-échantillonnées à rebours pour un retour rapide.

5. Procédé selon la revendication 4, où le nombre défini d'images concerne une séquence de 12 images.

6. Procédé selon la revendication 4 ou 5, où lors du sous-échantillonnage à rebours sur la base de l'image décodée en dernier, les données d'image d'images individuelles définies sont acheminées à l'encodeur (21, 45), dans un ordre chronologique inverse.

7. Procédé selon une des revendications précédentes, où les données d'image sont codées et décodées selon la norme MPEG1 ou MPEG2.

8. Dispositif pour la réalisation d'un procédé selon une des revendications précédentes, avec une unité de mémoire et un décodeur pour le décodage des données d'image enregistrées dans l'unité de mémoire sous forme de séquence d'images unidirectionnelles codées, bidirectionnelles codées et intra-codées, **caractérisé en ce que** des moyens sont prévus qui extraient les données d'image à une vitesse n fois supérieure par rapport au mode de lecture régulier, où n est un nombre, en particulier un nombre naturel, supérieur ou égal à 2, **caractérisé en ce qu'**un décodeur (18, 43) est aussi prévu, qui décode à une vitesse n fois supérieure les données d'image extraites, **caractérisé en ce qu'**une unité de sous-échantillonnage (19, 44) est également prévue, qui sélectionne uniquement les données d'image d'une image sur n images parmi les données d'image décodées et **caractérisé en outre en ce qu'**un encodeur (21, 45) est prévu, qui code à une vitesse régulière les données d'image des images sélectionnées.

9. Dispositif selon la revendication 8, présentant une mémoire tampon (20, 51) qui reçoit les données d'image décodées d'un certain nombre d'images et **caractérisé en ce que** des moyens sont prévus qui, sur la base de l'image décodée en dernier, mettent à la disposition de l'encodeur (21, 45) les données d'image d'une image sur n images en ordre chronologique inverse.
